# EUROPEAN PATENT SPECIFICATION

(11) **EP 0 335 316 B1**
(45) Date of publication and mention of the grant of the patent: **24.05.1995**
(21) Application number: 89105428.0
(22) Date of filing: 28.03.1989
(51) Int. Cl.: H02J 9/06, H02J 7/00

(54) **Apparatus for controlling selection of batteries**
Vorrichtung zur Batterieauswahlsteuerung
Dispositif de commande de sélection d'une batterie

(30) Priority: 30.03.1988 JP 42679/88 U; 31.03.1988 JP 43760/88 U; 28.04.1988 JP 105904/88
(43) Date of publication of application: 04.10.1989
(73) Proprietor: KABUSHIKI KAISHA TOSHIBA, Kawasaki-shi, Kanagawa-ken 210 (JP)
(72) Inventor: Shibasaki, Kazuya c/o Patent Division, Minato-ku Tokyo 105 (JP); Ito, Hironori c/o Patent Division, Minato-ku Tokyo 105 (JP); Ohashi, Yasuhiro c/o Patent Division, Minato-ku Tokyo 105 (JP); Kasashima, Masahiko c/o Patent Division, Minato-ku Tokyo 105 (JP)
(74) Representative: Henkel, Feiler, Hänzel & Partner

(56) References cited:
- EP-A- 0 164 890
- US-A- 4 492 876
- US-A- 4 716 354
- US-A- 4 730 121
- PATENT ABSTRACTS OF JAPAN vol. 10, no. 266 (P-496)(2322) 11 September 1986,& JP-A-61 91708 (FANUC LTD.) 09 May 1986,
- EDN ELECTRICAL DESIGN NEWS. vol. 28, no. 19, September 1983, BOSTON,MASSACHUSETTS, USA pages 197 - 208; D.K. SCHUMAN: "Step-by-step design yields battery supply for portable mC"
- PATENT ABSTRACTS OF JAPAN vol. 2, no. 106 (E-54)(5625) 31 August 1978,& JP-A-53 71865 (DAINI SEIKOSHA K.K.) 26 June 1978,

## Description

The present invention relates to an apparatus for controlling selection of batteries. Such apparatuses are known from US-A-4716354 and US-A-4492876.

Due to its compactness, light weight and portability, battery-driven electronic devices, such as laptop computers, are becoming popular recently. Since such devices are normally equipped with a single battery, their operation time is short. In addition, when the devices cannot operate on AC power, their operation is interrupted for battery replacement. Further, if power failure occurs during operation, data processed in the devices would be erased or it would take time to restart the operation after power recovery.

With the above in mind, there is a demand for a device which ensures battery replacement without interrupting operation of electronic devices, such as laptop computers.

Accordingly, it is an object of this invention to provide an apparatus for controlling selection of batteries. This object is achieved by an apparatus according to claim 1.

This invention can be more fully understood from the following detailed description when taken in conjunction with the accompanying drawings, in which:
Fig. 1 is a diagram of a battery switching apparatus according to the first embodiment of this invention;
Fig. 2 is a diagram of a detecting circuit of the battery switching apparatus shown in Fig. 1;
Fig. 3 is a diagram of a switch used in the battery switching apparatus shown in Fig. 1;
Fig. 4 is a timing chart of battery selection;
Fig. 5 is an operation flowchart for the battery switching apparatus shown in Fig. 1;
Fig. 6 is a diagram of a battery switching apparatus according to the second embodiment of this invention;
Fig. 7 is a diagram of a detecting circuit of the battery switching apparatus shown in Fig. 6;
Fig. 8 is an operation flowchart for the battery switching apparatus shown in Fig. 6; and
Fig. 9 is a diagram showing a remaining energy.

An embodiment of this invention will be described below with reference to the accompanying drawings.

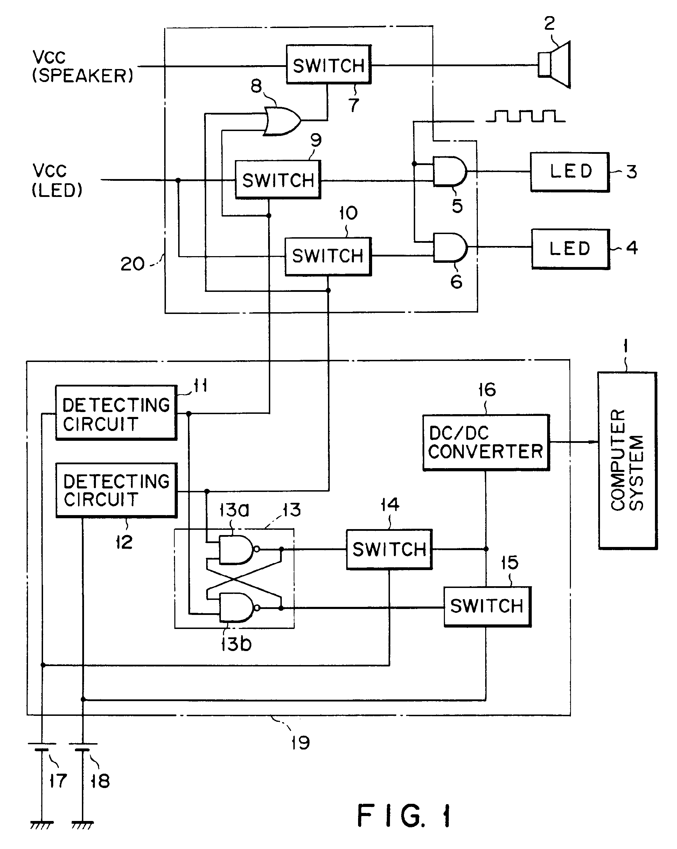

Referring to Fig. 1, the battery switching apparatus includes batteries 17 and 18 serving as power sources to operate computer system 1, selecting circuit 19 for selecting either battery 17 or 18, LEDs (Light Emitting Diodes) 3 and 4 serving to indicate consumption of energies of batteries 17 and 18, speaker 2, and drive controller 20 for controlling speaker 2 and LEDs 3 and 4.

Selecting circuit 19 has detecting circuits 11 and 12 for detecting the terminal voltages of batteries 17 and 18, switches 14 and 15 for switching the supply of power from batteries 17 and 18 to computer system 1, flip-flop circuit 13 for selecting either switch 14 or 15 in accordance with the terminal voltages detected by detecting circuits 11 and 12, DC-DC converter 16 for converting the power from batteries 17 and 18 into predetermined power. Flip-flop circuit 13 has NAND circuits 13a and 13b. Drive controller 20 has switches 9 and 10 for switching between LEDs 3 and 4 for their lighting, AND circuits 5 and 6, switch 7 for switching on or off speaker 2 for generation of an alarm, and OR circuit 8 for rendering switch 7 on when one of batteries 17 and 18 is in a low battery condition. The "low battery condition" comes before the condition in which the computer system can no longer maintain the normal operation.

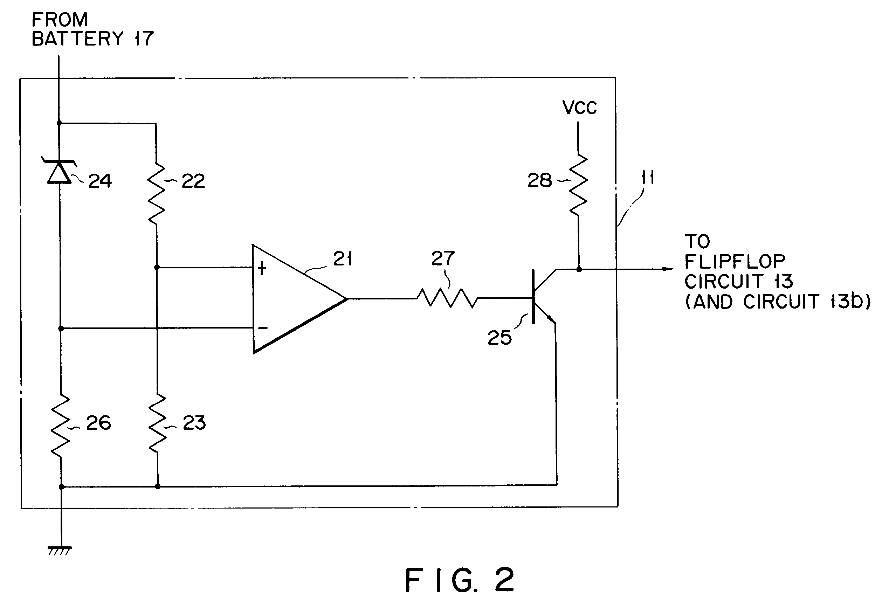

Fig. 2 illustrates the diagram of the detecting circuit 11. The output signal of operational amplifier 21 is determined by signals I+ and I- respectively supplied to its + and - input terminals. If the signal I+ received at the + input terminal and signal I-received at the - input terminal hold the relation of I+ ≧ I-, the output signal is at a high level. If I+ < I-, the output signal is at a low level. A reference value for detecting the low battery voltage of battery 17 is determined by the ratio of the resistances of resistors 22 and 23 and the rated value of Zener diode 24. Transistor 25 is switched on/off by the output signal of operational amplifier 21. Resistors 26 and 27 are provided to protect detecting circuit 11. Resistor 28 is provided to maintain the output signal of detecting circuit 11 at a high level when transistor 25 is off.

If the power from battery 17 is sufficient for the system to operate, the signals received at the + and - input terminals of operational amplifier 21 hold the relation of I+ ≧ I-, so that the output signal of operational amplifier 21 becomes a high level. At this time, since transistor 25 is on, the output signal of detecting circuit 11 has a low level. When the power of battery 17 decreases and the relation between signals input to the + and - input terminals of operational amplifier 21 is I+ < I-, the output signal of operational amplifier 21 becomes a low level. Transistor 25 is off and thus the output signal of detecting circuit 11 becomes a high level.

Detecting a circuit 12 has the same configuration as detecting circuit 11, and therefore operates similarly.

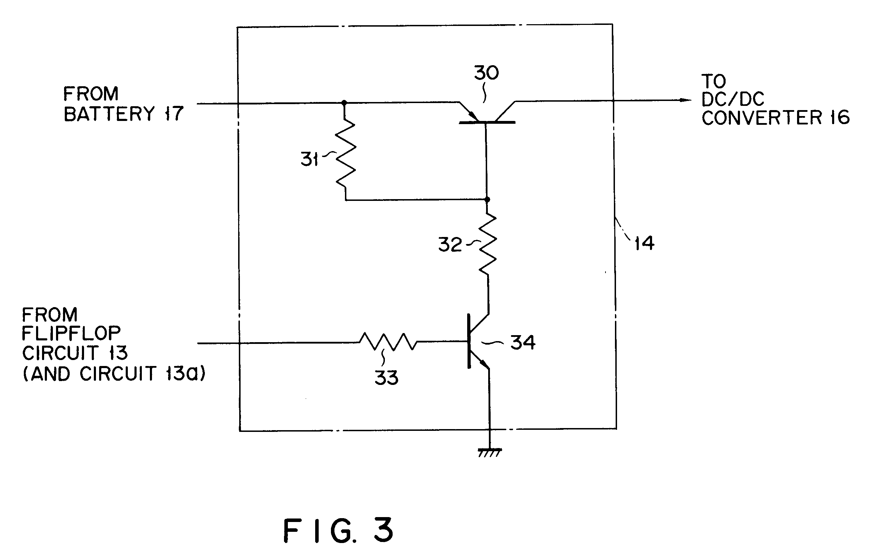

Fig. 3 illustrates the diagram of switch 14 which has transistors 30 and 34 and resistors 31 to 33. Transistor 34 is on/off by the output signal of NAND circuit 13a of flip-flop circuit 13. Transistor 30 is on or off in accordance with the switching of transistor 34. If transistor 34 is off, transistor 30 is on, thus the power is supplied to computer system 1 from battery 17 through DC-DC converter 16. Switches 7, 9, 10 and 15 have the same configuration as switch 14 and thus operate similarly.

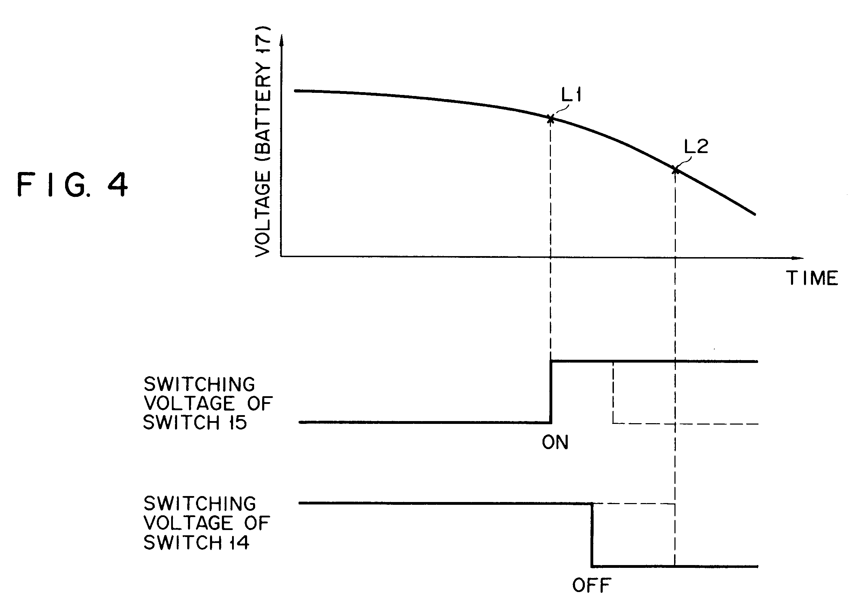

If battery 17 keeps supplying power to computer system 1 (switch 14 is on and switch 15 is off) as shown in Fig. 4, detecting circuit 11 keeps detecting the terminal voltage of battery 17. When the terminal voltage of battery 17 falls below a preset low battery voltage L1, switch 15 is on and power from battery 18 is supplied to computer system 1. When the terminal voltage of battery 18 detected by detecting circuit 12 is greater than the low battery voltage L1, switch 14 is off and the supply of the power from battery 17 is stopped (see the solid lines for the behavior of the switching voltages of switches 14 and 15 in Fig. 4). When the terminal voltage of battery 18 falls below the low battery voltage L1, switch 14 keeps switching on and switch 15 is off (see the broken lines in the same diagram). In order to inform an operator of the low battery condition, LEDs 3 and 4 blink. Therefore, it is possible to perform battery replacement before the operating voltage of the system reaches the voltage L2. The voltage L2 indicates the limit under which computer system 1 can no longer keep the proper operation.

With regard to the indication of the power condition by the LEDs, if LED 3 is not blinking, it indicates battery 17 is not used. That is, it is indicated that computer system 1 is operating on power from battery 18 or power from an external power source (not shown). When battery 17 becomes a low battery condition, LED 3 blinks, and an alarm is generated through speaker 2, indicating the low battery condition. When battery 18 becomes a low battery condition, LED 4 blinks, and an alarm is generated.

However, it is possible to generate the alarm when batteries 17 and 18 become a low power condition, by replacing OR circuit 8 for AND circuit.

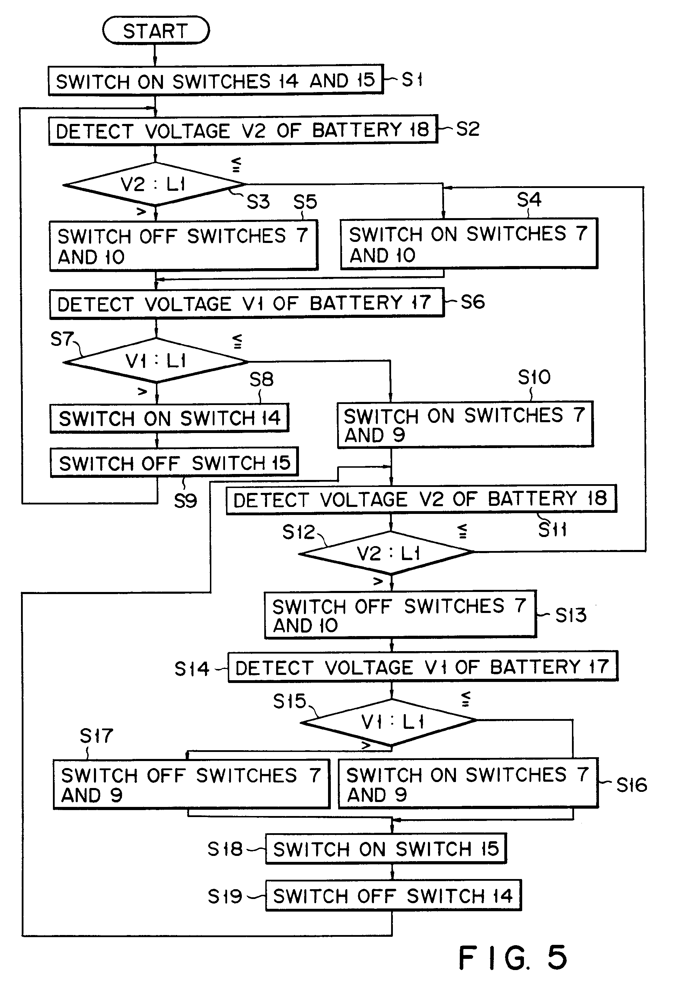

Referring now to the flowchart shown in Fig. 5, the operation of the battery switching apparatus according to this invention will be described below.

In step S1, switches 14 and 15 are switched on. After the voltage V2 of battery 18 is detected in step S2, the detected voltage V2 is compared with a preset low battery voltage L1 in step S3.

If V2 > L1 in step S3, switches 7 and 10 are switched off (step S5) and the process of step S6 is then executed. If V2 ≦ L1 in step S3, switches 7 and 10 are switched on (step S4) before the process of step S6 is executed.

The voltage V1 of battery 17 is detected in step S6. The detected voltage V1 is compared with the preset low battery voltage L1 in step 7.

If V1 > L1 in step S7, switch 14 is switched on (step S8) and switch 15 is then switched off (step S9). Thereafter, the above-described operation sequence starting from step S2 is repeated. In other words, battery 17 keeps supplying its power to computer system 1 until the voltage V1 of battery 17 becomes less than or equal to the low battery voltage L1.

If V1 ≦ L1 in step S7, switches 7 and 9 are switched on (step S10). In the subsequent step S11, the voltage V2 of battery 18 is detected, and the detected voltage V2 is compared with the low battery voltage L1 in step 12.

If V2 ≦ L1 in step S12, step S4 (turning on switches 7 and 10) is executed and the operation starting from step S6 is then executed.

If V2 > L1 in step S12, switches 7 and 10 are switched off (step S13) and the voltage V1 of battery 17 is detected in step S14. In the subsequent step S15, the voltage V1 of battery 17 is compared with the low battery voltage L1.

If V1 > L1 in step S15, switches 7 and 9 are switched off (step S17) and step S18 is executed. If V1 ≦ L1 in step S15, switches 7 and 9 are turned on (step S16) before step S18 is executed.

After switch 15 is switched on (step S18), switch 14 is switched off (step S19), and the flow returns to step S11 for execution of the operational sequence following it. In other words, the supply of the power from battery 18 to computer system 1 is maintained until the voltage V2 of battery 18 becomes less than or equal to the low battery voltage L1.

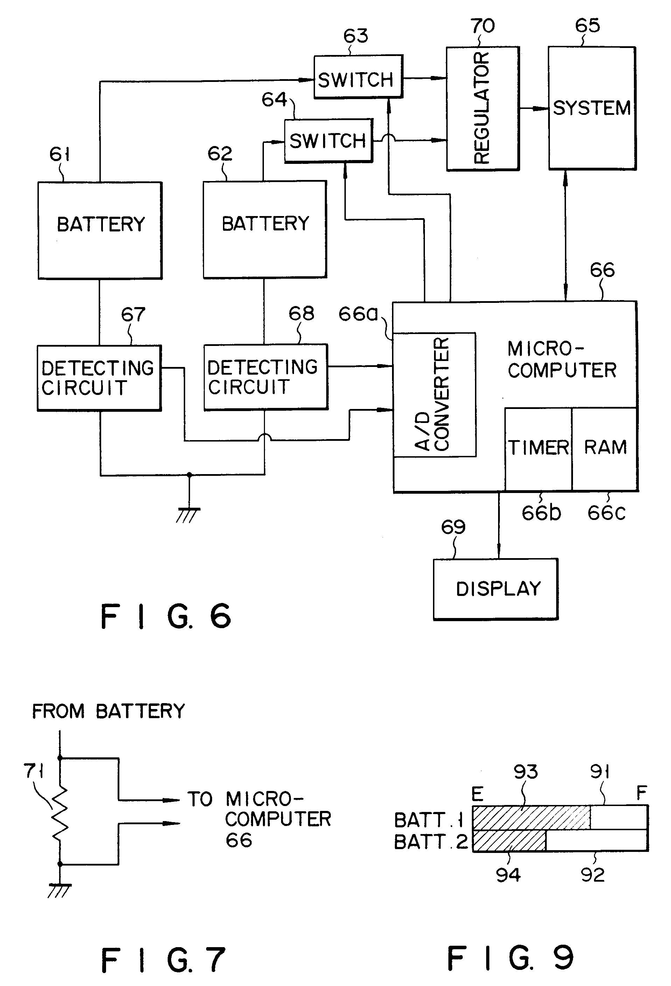

Another embodiment of this invention will be described below referring to Fig. 6. In Fig. 6, the energies remaining in batteries 61 and 62 are computed by microcomputer 66, for example, TMP47C660, manufactured by TOSHIBA in Japan. Microcomputer 66 has A/D converter 66a, timer 66b and RAM 66c. Either battery 61 or 62 is selected by its associated switch 63 or 64 that is controlled by a control signal from microcomputer 66. The power from the selected battery is supplied through regulator 70 to system 65. Switches 63 and 64 are switched by supplying the control signal from microcomputer 66 to the base side of transistor 34 in the circuit shown in Fig. 3. The outputs of detecting circuits 67 and 68 which detect the consumption energy of the batteries are supplied to A/D converter 66a of microcomputer 66. Based on the outputs of detecting circuits 67 and 68, microcomputer 66 computes the remaining energies of the batteries. The computation results are displayed in display 69. Detecting circuits 67 and 68 may be realized by the circuit shown in Fig. 7 in which a terminal voltage of resistor 71 having a known resistance is input to A/D converter 66a of microcomputer 66.

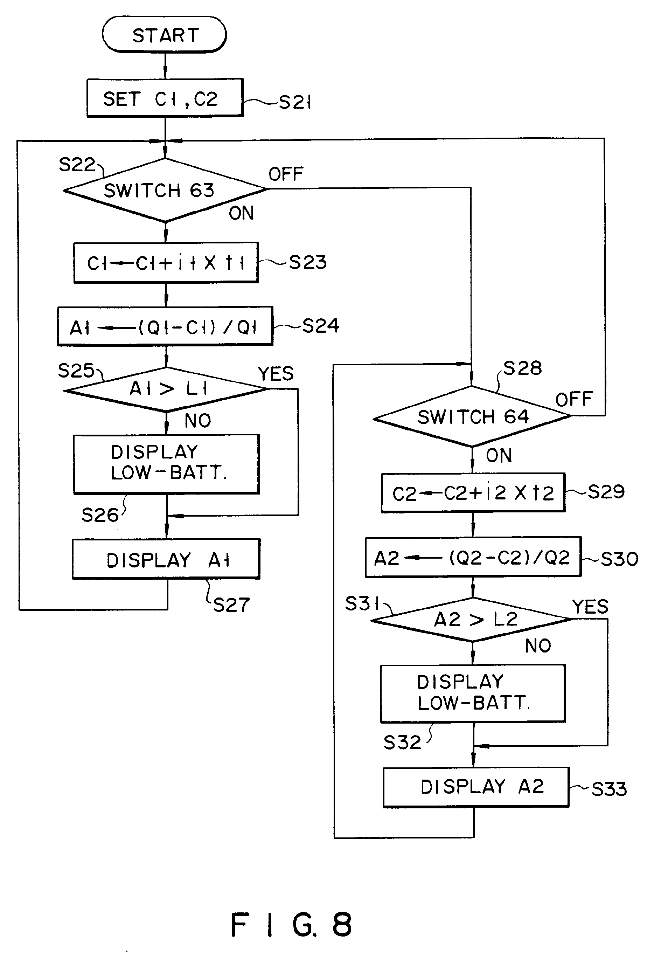

Referring now to the flowchart of Fig. 8, the operation of the embodiment shown in Fig. 6 will be described. First, data representing the energies of the batteries used so far, which are stored in RAM 66c of microcomputer 66, are respectively set as C1 and C2 (step S21). Then, the status of switch 63 is checked (step S22). The following description will be given on the premise that the power of battery 61 is supplied to system 65 (i.e., switch 63 is ON). Based on the output of detecting circuit 67, microcomputer 66 computes the consumption energy from the discharge current i1 and the time t2, which is measured by timer 66b of microcomputer 66. The total consumption energy is acquired from the computed consumption energy (i1 × t1) and the energy consumed so far, C1, and the resultant value is set as a new C1 (step S23). Then, the ratio of the remaining energy to the total energy, A1, is computed from the initial battery energy Q1 of the battery 61 and the total consumption energy C1 (step S24). When A1 is smaller than a predetermined value L1 (step 25), the present status is indicated as Low-Battery (step S26); this display may be done by LED's 3 and 4 or speaker 2 as shown in Fig. 1. The ratio A1 is then displayed on display 69 (step 27), for example, in terms of the remaining energy 93 or 94 with respect to the initial battery energy 91 to 92, as shown in Fig. 9.

When the power of battery 62 is supplied to system 65 (i.e., switch 63 is ON) in step 28, the processes in steps 29 to 33 are executed in the same manner as those in steps 23-27. That is, the consumption energy is computed from the discharge current i2 of the battery 62 and time t2, the total consumption energy is computed from the computed consumption energy and the energy consumed so far, C2, and is set as a new C2, and the ratio of the remaining energy to the total energy, A2, is computed from the initial battery energy Q2 and the total consumption energy C₂. When A2 is smaller than a predetermined value L2, this status is indicated as Low-Battery and A2 is then displayed.

Since the battery in use can be detected by the statuses of switches 63 and 64, this battery can be indicated by, for example, blinking the area 91 and 92. The display section may be modified in such a way as to permit his battery indication only upon request from system 65.

Through the above operation, the operator can be informed of the timing for battery replacement. Therefore, the battery is replaced with a new one. Further, the batteries can be automatically switched from one to the other. Interruption of the operation of the computer system is not occurred at the time of battery replacement and thus ensures continuous operation of the system.

Although this invention has been described with the above particular embodiment, it is not restricted to this case but can be modified in various manners within the scope of the claims.

Further, although a battery-driven type computer system has been described above, this invention can also apply to other electronic devices which are driven by a battery.

## Claims

1. An apparatus for controlling supplying of power to a system (1), said apparatus comprising:
a plurality of batteries (17, 18) which are individually replaceable;
detecting means (11, 12) for detecting voltages of the batteries (17, 18); and
selecting means (19) for selecting one battery from the batteries (17, 18),
said selecting means (19) selects said one battery from the batteries (17, 18) when the detected voltage in said one battery is larger than a predetermined voltage, to supply the power from said one battery to the system (1), and selects other than the selected battery having a voltage larger than the predetermined voltage when the detected voltage in said one battery is less than the predetermined voltage during supplying of the power from said one battery to the system (1);
said detecting means (11, 12) includes a plurality of detecting circuits (11, 12) and detects battery (17, 18) voltages corresponding to said respective batteries (17, 18);
said selecting means (19) comprises:
said plurality of detecting circuits (11, 12), provided corresponding to the respective batteries (17, 18), each for outputting a detecting signal when the detected voltage is at the predetermined voltage or more;
logic circuit (13) for selecting one of the batteries (17, 18) for supplying power to the system (1) based on the detected signal output from the detecting circuits; and
switching means (14, 15) responsive to said logic circuit (13) for isolating the batteries (18) other than the selected battery from the system (1)
said apparatus further comprises
signaling means (2, 3, 4, 20) which signal a power condition of said one battery when the detected voltage in said one battery is less than a predetermined voltage; whereby
said selecting means (13, 14, 15) stop supply of the power from said one battery (17) when said another battery (18) is selected, and automatically reselect said one battery (17), when the detected voltage in said another battery (18) is less than the predetermined voltage.

2. The apparatus according to claim 1, characterized in that the detecting means (11, 12) includes comparing means (21) for comparing the voltages of the batteries (17, 18) with the predetermined voltage.

3. The apparatus according to claim 1 or 2, characterized in that there is provided a light-indicating means (3, 4, 5, 6, 9, 10) for providing a light indication representing the power condition of said one of the batteries (17).

4. The apparatus according to any one of the claims 1, 2 and 3, characterized in that there is provided a voice-outputting means (2, 7, 8) for voice-outputting a signal representing the power condition of said one of the batteries (17).

5. The apparatus according to any one of claims 1, 2 to 4, characterized in that said detecting means (11, 12) generates a first signal to indicate a voltage level of said one of the batteries (17), and said selecting means (13, 14, 15) isolates said one of the batteries (17) in response to the first signal.

6. The apparatus according to any one of claims 1, 2 to 4, characterized in that said detecting means (11, 12) generates a first signal to indicate a voltage level of said one of the batteries (17), and a second signal to indicate a voltage level of a battery other than selected (18), and said selecting means (19) isolates said one of the batteries (17) in response to the first and second signals.

## Patentansprüche

1. Ein Gerät zum Regeln einer Energiezufuhr zu einem System (1), wobei das Gerät umfaßt:
eine Vielzahl von Batterien (17, 18), die einzeln austauschbar sind;
Feststellungsmittel (11, 12), um Spannungen der Batterien (17, 18) festzustellen; und
Auswahlmittel (19), um eine Batterie aus den Batterien (17, 18) auszuwählen, wobei das Auswahlmittel (19) die eine Batterie aus den Batterien (17, 18) auswählt, wenn die festgestellte Spannung in der einen Batterie größer als eine vorbestimmte Spannung ist, um die Energie von der einen Batterie an das System (1) zu liefern, und eine andere als die ausgewählte Batterie auswählt, welche eine Spannung besitzt, die größer als die vorbestimmte Spannung ist, wenn die festgestellte Spannung in der einen Batterie geringer ist als die vorbestimmte Spannung während einer Zufuhr der Energie von der einen Batterie zu dem System (1);
das Feststellungsmittel (11, 12) eine Vielzahl von Feststellungsschaltungen (11, 12) einschließt und Batterie (17, 18)-Spannungen entsprechend den jeweiligen Batterien (17, 18) feststellt;
wobei das Auswahlmittel (19) enthält:
die Vielzahl von Feststellungsschaltungen (11, 12), die entsprechend den jeweiligen Batterien (17, 18) vorgesehen sind, wobei jede ein Feststellungssignal ausgibt, wenn die festgestellte Spannung bei der vorbestimmten Spannung oder höher liegt;
eine logische Schaltung (13), um eine der Batterien (17, 18) für eine Energiezufuhr zu dem System (1) beruhend auf dem von den Feststellungsschaltungen ausgegebenen Signal auszuwählen; und
Umschaltmittel (14, 15), die auf die logische Schaltung (13) ansprechen, um die Batterien (18), die von der ausgewählten Batterie verschieden sind, von dem System (1) zu isolieren,
wobei das Gerät weiter enthält
Signalmittel (2, 3, 4, 20), die einen Energiezustand der einen Batterie signalisieren, wenn die festgestellte Spannung in der einen Batterie geringer als eine vorbestimmte Spannung ist; wodurch
das Auswahlmittel (13, 14, 15) eine Zufuhr der Energie von der einen Batterie (17) stoppt, wenn die andere Batterie (18) ausgewählt wird, und automatisch die eine Batterie (17) wieder auswählt, wenn die festgestellte Spannung in der anderen Batterie (18) geringer als die vorbestimmte Spannung ist.

2. Das Gerät nach Anspruch 1, dadurch gekennzeichnet, daß das Feststellungsmittel (11, 12) Vergleichsmittel (21) einschließt, um die Spannungen der Batterien (17, 18) mit der vorbestimmten Spannung zu vergleichen.

3. Das Gerät nach Anspruch 1 oder 2, dadurch gekennzeichnet, daß ein Leuchtanzeigemittel (3, 4, 5, 6, 9, 10) vorgesehen ist, um eine Leuchtanzeige zu liefern, die den Energiezustand der einen der Batterien (17) repräsentiert.

4. Das Gerät nach irgendeinem der Ansprüche 1, 2 oder 3, dadurch gekennzeichnet, daß ein akustisches Ausgabemittel (2, 7, 8) vorgesehen ist, um ein Signal akustisch auszugeben, das den Energiezustand der einen der Batterien (17) repräsentiert.

5. Das Gerät nach irgendeinem der Ansprüche 1, 2 bis 4, dadurch gekennzeichnet, daß das Feststellungsmittel (11, 12) ein erstes Signal erzeugt, um einen Spannungspegel der einen der Batterien (17) anzuzeigen, und das Auswahlmittel (13, 14, 15) die eine der Batterien (17) als Antwort auf das erste Signal isoliert.

6. Das Gerät nach irgendeinem der Ansprüche 1, 2 bis 4, dadurch gekennzeichnet, daß das Feststellungsmittel (11, 12) ein erstes Signal, um einen Spannungspegel der einen der Batterien (17) anzuzeigen, und ein zweites Signal erzeugt, um einen Spannungspegel einer Batterie, die von der ausgewählten (18) verschieden ist. anzuzeigen, und das Auswahlmittel (19) die eine der Batterien (17) als Antwort auf die ersten und zweiten Signale isoliert.

## Revendications

1. Appareil de commande de la fourniture d'énergie à un système (1), ledit appareil comprenant :
une pluralité de batteries (17, 18) qui sont remplaçables individuellement ;
un dispositif de détection (11, 12) pour détecter les tensions de batteries (17, 18) ; et
un dispositif de sélection (19) pour sélectionner une batterie parmi les batteries (17, 18) ;
ledit dispositif de sélection (19) sélectionne une batterie à partir des batteries (17, 18) lorsque la tension détectée dans ladite batterie est plus grande qu'une tension prédéterminée, afin de fournir l'énergie de ladite batterie au système (1), et sélectionne une autre batterie que la batterie sélectionnée ayant une tension plus grande que la tension prédéterminée lorsque la tension détectée dans ladite batterie est inférieure à la tension prédéterminée pendant la fourniture de l'énergie par ladite batterie au système (1) ;
ledit dispositif de détection (11, 12) comprend une pluralité de circuits de détection (11, 12) et détecte des tensions de batteries (17, 18), correspondant auxdites batteries respectives (17, 18) ;
ledit dispositif de sélection (19) comprend :
ladite pluralité de circuits de détection (11, 12) fournis correspondant aux batteries respectives (17, 18), chacun pour fournir un signal de détection lorsque la tension détectée est à la tension prédéterminée ou plus ;
un circuit logique (13) pour sélectionner une des batteries (18) pour fournir de l'énergie au système (1) sur la base du signal détecté fourni par les circuits de détection ; et
un dispositif de commutation (14, 15) sensible audit circuit logique (13) pour isoler les batteries (18) autres que la batterie sélectionnée du système (1)
ledit appareil comprend en outre
un dispositif de signalisation (2, 3, 4, 20) qui signale un état d'énergie de ladite batterie lorsque la tension détectée dans ladite batterie est inférieure à une tension prédéterminée ; de sorte que
ledit dispositif de sélection (13, 14, 15) arrête la fourniture de l'énergie de ladite batterie (17) lorsque ladite autre batterie (18) est sélectionnée, et resélectionne automatiquement ladite batterie (17), lorsque la tension détectée dans ladite autre batterie (18) est inférieure à la tension prédéterminée.

2. Appareil selon la revendication 1, caractérisé en ce que le dispositif de détection (11, 12) comprend un dispositif de comparaison (21) pour comparer les tensions des batteries (17, 18) avec la tension prédéterminée.

3. Appareil selon la revendication 1 ou 2, caractérisé en ce qu'un dispositif d'indication de lumière (3, 4, 5, 6, 9, 10) est fourni pour donner une indication de lumière représentant l'état d'énergie de ladite une des batteries (17).

4. Appareil selon l'une quelconque des revendications 1, 2 et 3, caractérisé en ce qu'un dispositif de sortie vocale (2, 7, 8) est fourni pour la sortie vocale d'un signal représentant l'état d'énergie de ladite une des batteries (17).

5. Appareil selon l'une quelconque des revendications 1, 2 à 4, caractérisé en ce que ledit dispositif de détection (11, 12) génère un premier signal pour indiquer un niveau de tension de ladite une des batteries (17), et ledit dispositif de sélection (13, 14, 15) isole ladite une des batteries (17) en réponse au premier signal.

6. Appareil selon l'une quelconque des revendications 1, 2 à 4 caractérisé en ce que ledit dispositif de détection (11, 12) génère un premier signal pour indiquer un niveau de tension de ladite une des batteries (17), et un second signal pour indiquer un niveau de tension d'une batterie autre que celle sélectionnée (18), et ledit dispositif de sélection (19) isole ladite une des batteries (17) en réponse aux premier et second signaux.
